# EUROPEAN PATENT SPECIFICATION

(11) **EP 3 123 600 B1**
(45) Date of publication and mention of the grant of the patent: **11.07.2018**
(21) Application number: 15722022.9
(22) Date of filing: 25.03.2015
(51) Int. Cl.: H02K 15/06

(54) **TOOL FOR INSERTING TURNS IN LAMINATED CORES**
WERKZEUG ZUM EINFÜGEN VON WINDUNGEN IN LAMINIERTEN KERNEN
OUTIL D'INSERTION DE SPIRES DANS DES NOYAUX LAMINÉS

(30) Priority: 26.03.2014 BR 102014007277
(43) Date of publication of application: 01.02.2017
(73) Proprietor: Whirlpool S.A., 04578-000 São Paulo - SP (BR)
(72) Inventor: SCHÖPF, Roberto Alexandre, CEP-89202-312 Joinville, SC (BR); SCHEUER, Marlo José, CEP-98217-430 Joinville, SC (BR); NEVES, Anderson das, CEP-89206-410 Joinville, SC (BR)
(74) Representative: Soldatini, Andrea
(86) International application number: PCT/BR2015/000040
(87) International publication number: WO 2015/143518

(56) References cited:
- US-A- 4 520 287
- US-A- 4 955 130
- US-A- 5 044 068

## Description

### Field of the Invention

The present invention refers to a tool for inserting turns in laminated cores, particularly developed for the manufacture of laminated stators of electric machines, such as electromagnetic motors. More preferably, said tool for inserting turns of the present invention comprises technical, construction and structural features capable of promoting and ensuring suitable conduction of turns to suitable grooves of the stator laminated core to prevent electric conductive wires from breaking during the process of inserting turns in the laminated core to form an electric motor coil.

### Background of the Invention

As widely known by those skilled in the art, the process of inserting turns in laminated cores can be basically carried out in two ways. In the first way the turns are formed on a template and then transferred to and manually arranged on an insertion tool. In the second way turns are assembled and produced directly on the insertion tool, which consequently can result in higher accuracy and higher automation level.

Thus, after the turns are formed said insertion tool pushes the set of turns into the grooves provided in the laminated core to form coils and then laminated stators for application in electric machines.

Patent documents US 4,520,287, US 4,955,130 and US 5,044,068 disclose tools for inserting coils in laminated cores for fabrication of electric motor stators.

One of the drawbacks observed in these processes for forming turns is the intertwining of wires of different grooves, either at the moment of transferring a template to the insertion tool or at the moment when winding is directly effected on the insertion tool. This is due to the occurrence of determined dimensional relations between the thickness of the turn wire, inner diameter of the core, core groove shape and type of material of the electric conductive material wire which may affect the process and produce this undesirable intertwining.

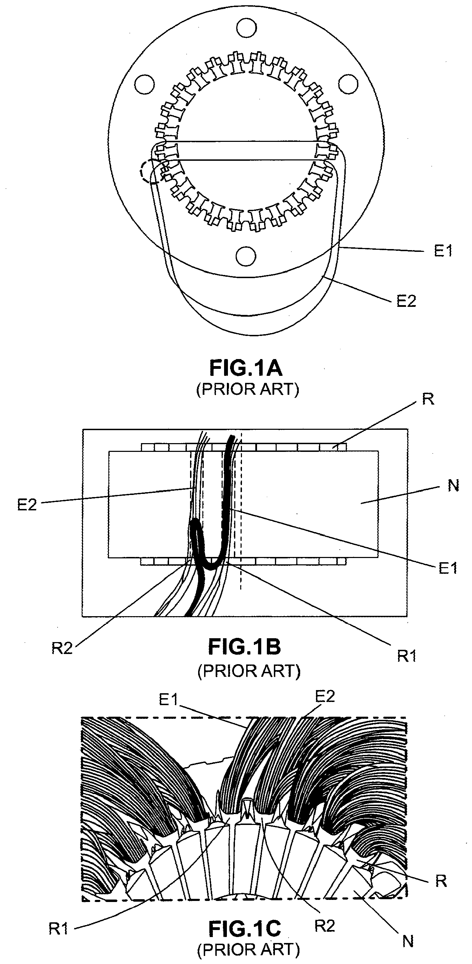

More particularly, it is observed that during the step of inserting turns into the respective grooves, there are some portions which are in certain proximity between the sets of vicinal turns, mainly in the extreme portions. It should be clarified that, according to the conventional nomenclature of the present technology, these positions and "extreme" portions represent on the regions where they are disposed the support lamellas of highest pitch. Fig. 1A illustrates this intertwining situation of vicinal turns in which the "extreme" portions can be observed wherein the last grooves (R) are positioned. In this case, it is noted that turns (E1) of the most extreme groove (R1) will overlap the grooves (E2) of vicinal groove (R2) since it occurs that the distance between the grooves (R1) and (R2) is substantially small by virtue of the relation on the perimeter of the circumference formed by a series of grooves forming the stator. In other words, it can be said that said grooves (R1) and (R2) particularly arranged at the regions of the support lamellas of the coil having the highest pitch.

More objectively, it can be said that during the process of inserting turns, those tools and equipments available in the art will produce intertwining caused by the proximity of subsequent grooves and turns, more particularly on the extreme portions. By this way, the intertwining of turns relative to vicinal grooves will generate compression on a section of a turn intertwined by a vicinal turn when same are being subjected to the process of insertion in groove thereof. Hence, this intertwined section is then forced towards the wrong groove such as illustrated in Fig. 1B, from which the intertwined section pressed by the turns of the vicinal groove is visualized.

As can be appreciated by a person skilled in the art such a drawback is really undesirable by manufacturers since the stator integrity may be at risk, mainly because it causes the rupture of the turn intertwined and pressed by the turns of the vicinal groove.

This problem is still more frequent and critical nowadays because manufacturers are replacing the material used in the production of said turns. More particularly, it is known that aluminum is being often used in the place of copper once the latter is substantially more expensive and consequently it results in sometimes unnecessary increase of costs, depending on the application.

One of the drawbacks of aluminum is its mechanical strength which is relatively lower than that of copper which was the material commonly used in the past. Thus, for this reason, with the use of aluminum it was verified that this situation became more critical since the turns would break more easily still during the process of insertion in the respective grooves, thereby compromising the entire stator fabrication process.

In order to eliminate these drawbacks caused by the intertwining of turns there have be known many adjustments made during the winding and inserting and insertion, for example: insertion speed of tool for inserting coils, total insertion pitch of the tool for inserting coils, position of the fixed lamella relative to the package of blades during insertion, etc. Nevertheless, it is observed that this kind of phenomenon is still arising due to the complexity to obtain adjustments and due interaction of all influent parameters.

Additionally, more particularly when the coils are manually transferred to the insertion tools, the operator should carefully carry out this operation since an incorrect disposition of turns on the insertion tool will certainly result in intertwining of turns of different grooves and, consequently, the production and assembly line of stators will be affected.

By this way, in view of the discussion above, it is possible to note that equipments and tools for inserting turns in groves of a laminated core already known from the state of the art lack practical and functional solutions to effectively eliminate the drawbacks caused by the intertwining of turns in vicinal grooves. More particularly, it is observed that the proposed procedures available in the state of the art to avoid problems related to intertwining and breakage of turns are complex and difficult to implement in the processes for fabricating and assembling stators used in electric motors.

### Objects of the Invention

In this context, the object of the present invention is to provide a tool for inserting turns for application in processes for fabricating and assembling laminated stators, particularly useful for electric motors, said tool comprising technical, structural and functional features developed to eliminate in a simple but efficient form the limitations and drawbacks found in the already known insertion tools and steps for insertion of turns in laminated cores during the processes of fabricating stators for electric motors.

More preferably, the object of the present invention is to provide a tool for inserting turns in laminates cores of stators, wherein the technical aspects of said tool have been designed and developed to effectively avoid intertwining risks. More specifically, the present invention promotes the dis-intertwining of turns which are intertwined therebetween in the upper portion of the insertion tool near the groove inlet and then it is possible to eliminate the drawbacks caused by the phenomenon of introducing intertwined turns in the grooves in production lines of laminated cores of electric motor stators.

Yet another object of the present invention is to provide a tool for inserting turns in laminated cores which optimizes the insertion step such that common intertwinings, whatever their nature is, which occur during the process, will not cause the turns to break.

Additionally, the present tool for inserting turns, in accordance with the present invention, aims at providing safe and efficient conditions to conduct the turns to their respective grooves. To this effect, it comprises a structural configuration which will guide the turns, separating the turns intended for different grooves and thereby conducting in a oriented way set of turns to the corresponding grooves.

Finally, in brief, the object of the present invention is to provide a tool for inserting turns in laminated cores, in particular for electric motor stators, which tool has been developed to improve stator fabrication and assembly process conditions, and mainly to eliminate the problems and drawbacks caused by intertwinings of turns during the step of inserting said turns in the respective grooves, more specifically the problem of breaking the turns when they are inserted in the wrong groove.

### Summary of the Invention

Hence, in order to achieve the above-mentioned objectives and technical effects, the present invention refers to a tool for inserting turns in laminated cores, particularly intended for a process of fabrication and assembly of motor electric stators. Said tool comprises a plurality of extreme support lamellas disposed on a base ring such that the turn coils are disposed on said extreme support lamellas. Said insertion tool, in accordance with the present invention, has been developed such that at least the extreme support lamellas are provided with one supplementary lamella arranged on the external surface of said support lamellas.

It is important to make it clear that, in the present invention, the term "extreme" should be understood as being the region in which the lamellas intended to support the coils having the highest pitch, are disposed, that is, the set of lamellas which are more distant from one another when the turn coils are accommodated.

According to a preferred embodiment of the present invention, the tool for inserting turns in laminated cores comprises supplementary lamellas disposed between the two extreme grooves of the laminated core such that said turn coils are sufficiently spaced apart from one another to eliminate risks of compression of eventual intertwined sections.

Furthermore, according to another possible embodiment of the present invention, a plurality of support lamellas are circumferentially distributed over the base ring.

In accordance with an alternative embodiment of the tool for inserting turns in laminated cores, in accordance with the present invention, all support lamellas are provided with supplementary lamellas to ensure that none of the turns of none of the coils is pressed in the wrong groove during the insertion process such that dis-intertwining of eventual intertwined turns is ensured. Further, according to a preferred embodiment, said supplementary lamella is a constitutive element of the support lamella, that is, said support and supplementary lamellas are made as a single piece. Optionally, it is also possible to propose a tool for inserting turns in laminated cores, which supplementary lamellas are independent parts and fixed on said support lamellas.

In order to improve efficiency, according to an advantageous embodiment of the present invention, the surface of said supplementary lamellas undergoes a treatment such that they exhibit a surface with a reduced roughness degree, particular in the region which contacts said turn coils.

With regard to the material, said lamellas are preferably made of a material selected from steel, aluminum, bronze, plastics, nylon or also a structural material having mechanical strength sufficient to withstand the insertion process without occurring structural flaws.

Finally, yet in according with a preferably advantageous embodiment, said supplementary lamellas should be in such a position relative to the support lamellas that the top of said supplementary lamellas is as most aligned and nearest as possible of the laminated core surface at the moment the turn coils are inserted in the respective grooves.

### Brief Description of Drawings

Features, advantages and technical effects of the present invention, as cited above, are better comprehended by a person skilled in the art from the following detailed description, merely made by way of example and not limitative, of the preferred embodiments and with reference to the attached schematic figures, wherein:
Fig. 1A illustrates an upper view of a conventional insertion tool according to teachings available in the state of the art;
Fig 1B illustrates a lateral cut view of a laminated core with an intertwined turn inserted in the wrong groove of the laminated core as occurs with the insertion tools known from the state of the art;
Fig. 1C illustrates an enlarged view of a detail of intertwined turn inserted in the wrong laminated core, as occurs with the insertion tools known from the state of the art;
Fig. 2 illustrates a lateral cut view of an insertion tool, in accordance with the present invention, disclosed beneath the laminated core prior to the insertion of the turns in the respective grooves;
Fig. 3 illustrates an upper view similar to Fig. 1A but depicting the tool for inserting turns in accordance with the present invention;
Fig. 4 illustrates a perspective cut view of the end of the tool for inserting turns in accordance with the present invention;
Fig. 5 illustrates a lower perspective view of the tool for inserting turns in accordance with the present invention during the step of inserting turns in the respective grooves of the laminated core;
Fig. 6 illustrates a partial perspective view of the tool for inserting turns in accordance with the present invention; and
Fig 7 illustrates a perspective view similar to Fig. 6 but depicting turn coils wound in the tool for inserting turns in accordance with the present invention.

### Detailed Description of the Invention

In accordance with the above-mentioned schematic figures, some examples of preferred and possible embodiments of the invention will be described in a more detailed way. Nevertheless, it should be clear that this refers to a mere exemplificative and non-limitative description since the present tool for inserting turns in laminated cores may exhibit different details and structural and dimensional aspects without, however, diverting from the scope of protection.

Moreover, it should be emphasized that reference numerals of the features of the present invention will not be fully reproduced in all figures mentioned above due to the fact that such reproduction of all reference numerals in all figures may compromise the comprehension and definition of the scope of protection of the present invention.

Thus, as illustrated in the attached figures, the tool for inserting turns in accordance with the present invention has been designed in a non-restrictive manner, to be applied to conventional equipments and machines for fabricating and assembling electric motor stators, more specifically to be used uring the step of inserting turn coils in their grooves (R) corresponding to laminated core (N).

More particularly, as widely known by those skilled in the art, and briefly commented above, during the step of inserting turn coils, the equipment or machine positions the laminate core (N) over the insertion tool (10), within which a narrow-shaped puncture moving and pushing the set of turn coils to the inside of each grove (R) of the laminated groove (N) is provided.

In this sense, in accordance with the present invention, said insertion tool 10 comprises a plurality of support lamellas11 disposed over a base ring 12 or which turn coils (E) are disposed, wherein at least the extreme support lamellas 11' are provided with a supplementary lamella 13 disposed on the external surface of said support lamella 11, 11'.

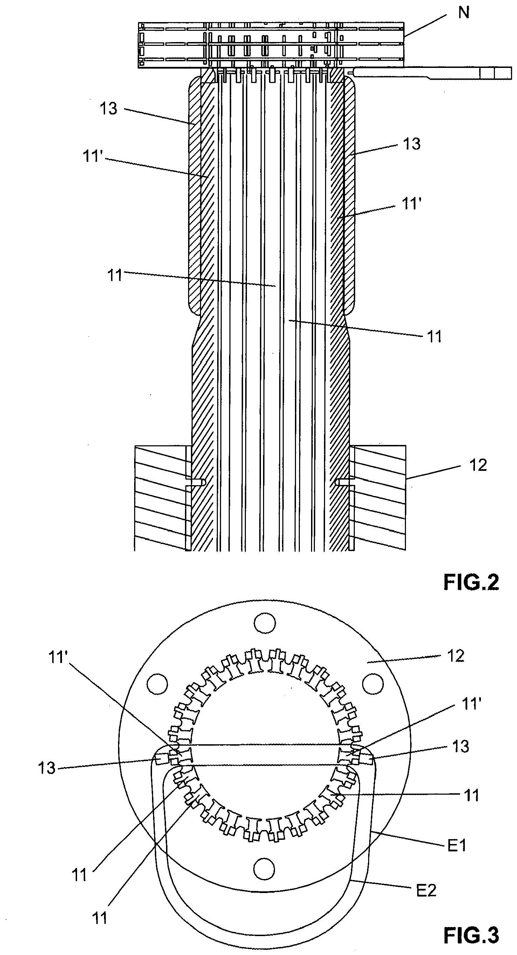

As illustrated in Fig. 3, the turn coil (E1) ends up supported and concomitantly away from the turn coil (E2) and then it ensures the dis-intertwining of eventual intertwining of the turn coils (E1) and (E2), thereby preventing the turn coil (E1) from being pushed into the groove corresponding to the turn coil (E2) when the puncture moves in a star form.

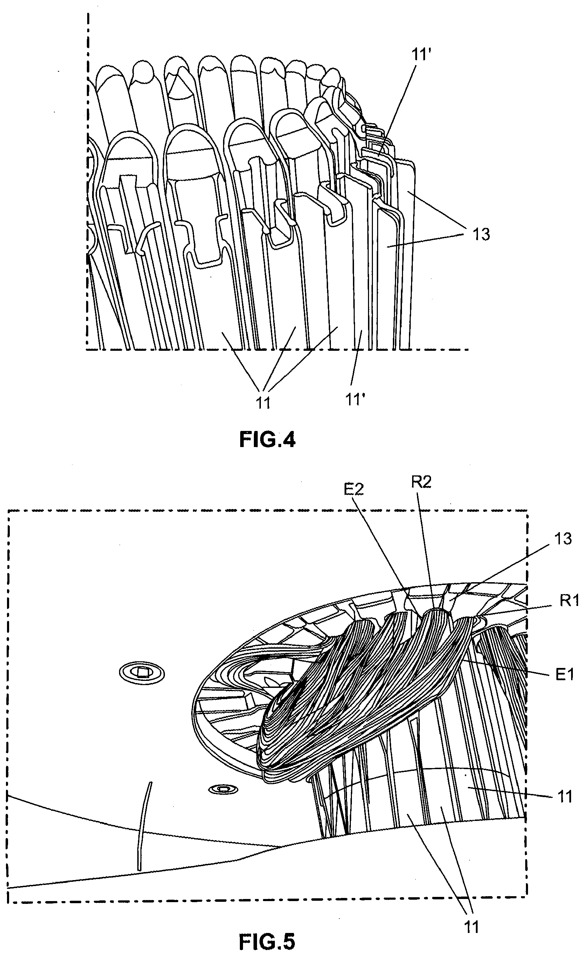

Further it is important to emphasize and merely by observation that despite the fact the attached figures illustrate only one side of the insertion tool and of the respective turn coils (E), those skilled in the art will understand that the laminated cores and the stators comprise two poles and, therefore, it should be clear that the present tool is constituted by a mirrored configuration, which is provided with the corresponding supplementary lamellas 13 on the extreme support lamellas of the other side of the tool. Fig. 4 shows an edge of the insertion tool in accordance with the present invention, in which said supplementary lamellas 13 are disposed on the extreme support lamellas 11' to form each stator pole.

In accordance with Fig. 5, it is observed that the turn coils (E1) and (E2) are sufficiently spaced apart by means of said supplementary lamella 13 arranged between two extreme grooves of the laminated core (N). Thus, it is noted that the separation generated by the supplementary lamella 13 forms a physical barrier capable of preventing that eventual intertwined segments of the turn coil (E1) are conducted to and pressed in the wrong groove (R2). In addition, by virtue of the configuration of said supplementary lamellas 13, it will be possible to mainly promote the dis-intertwining of eventual intertwined sections during the movement when the turns are inserted in the grooves.

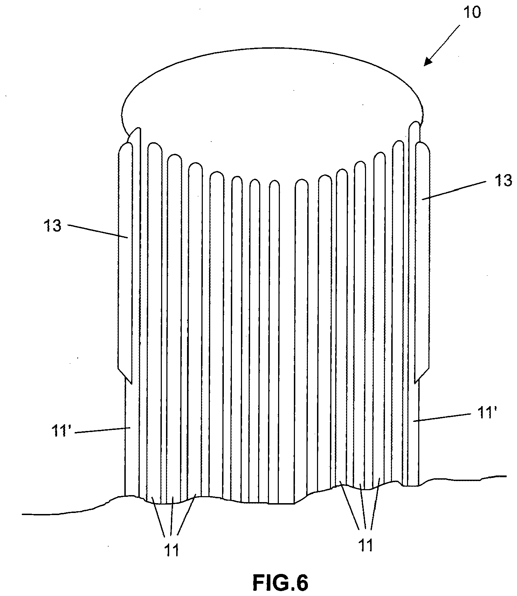

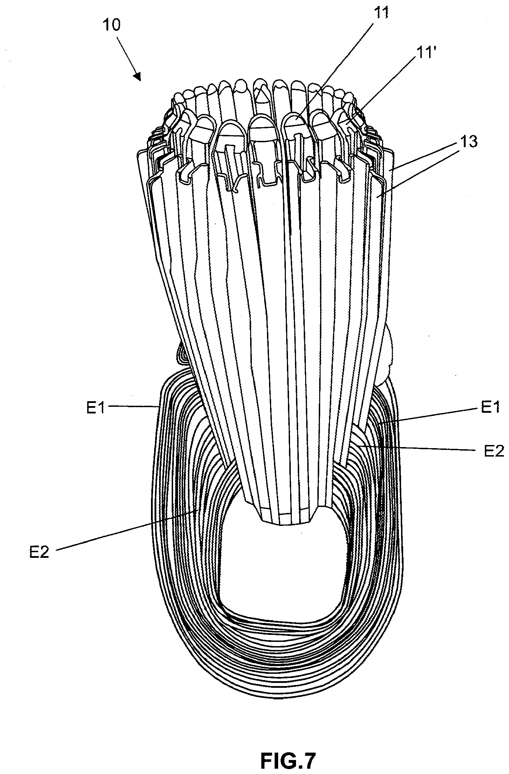

As illustrated in Figs. 6 and 7, the tool inserting turns 10 in accordance with the present application comprises a series of support lamellas 11 distributed preferably in circunferencial form wherein at least the extreme support lamellas 11' are provided with said supplementary lamellas 13 so as to move away the extreme turn coils (E1) and (E2).

As can be appreciated by those skilled in the art, despite the risks of occurring the compression of turns in the central coils in accordance with a possible embodiment of the present invention, said support lamellas 11 can also comprise supplementary lamellas 13, that is, depending on the embodiment and configuration of the laminate core, it is possible to dispose the supplementary lamellas13 over the support lamellas 11, thereby ensuring that there will not occur any insertion of turns in wrong grooves rather than that which should be really inserted.

In accordance with the possible embodiments of the present invention, said supplementary lamella 13 can be a constitutive element of the support lamella 11', that is, manufactured as being a single piece and, alternatively, said supplementary lamella 13 can be a part mounted and/or fixed by any means over the support lamella 11'.

Additionally, in accordance with a preferably advantageous embodiment of the present invention, the surface of said supplementary lamellas 13 undergoes a treatment to present a surface with reduced roughness degree, mainly in the regions where there will be a contact with the turns.

As should be appreciated by those skilled in the art, depending on motor type and specificities thereof, height relation, thickness, width and top radius of said supplementary lamellas 13 may comprise different combinations, which can be determined according to general knowledge of the technology involving fabrication and assembly of stators and electric motors.

In addition, according to the preferred embodiments of the present invention, said supplementary lamellas 13 are made of the same material as that of said support lamellas 11, more preferably a material selected from steel, aluminum, bronze, plastics, nylon or any other structural material which exhibits mechanical strength sufficient to withstand the insertion process with no occurrence of structural flaws.

It is important to point out that the positioning of said supplementary lamellas 13 over said support lamellas 11' should preferably be such that the top of said supplementary lamellas 13 is as most aligned and nearest as possible of the laminated core surface at the moment the turn coils are inserted in the respective grooves.

Finally, in view of the foregoing, it is important to point out that the present description is solely intended to describe by way of example the preferred embodiments of the tool for inserting turns in laminated cores of stators according to invention. Hence, as understood by those skilled in the art many modifications, variations and construction combinations of the elements which exert the same function substantially in the same form to obtain the same results are within the scope of protection delimited by the appended claims.

## Claims

1. Tools for inserting turns in the grooves (R) of laminated cores for fabrication of electric motor stators, which comprises a plurality of support lamellas (11) disposed on a base ring (12) over which turn coils (E) are positioned, **characterized in that** said tool further comprises extreme support lamellas (11'), said extreme support lamellas (11') being the set of support lamellas (11) more distant from one another when the turn coils are accommodated, and being disposed on the base ring (12), so that the turn coils (E) are disposed on said extreme support lamellas (11'); said extreme support lamellas (11') being provided with a supplementary lamella (13) disposed on the external surface of said support lamellas (11, 11'), wherein said supplementary lamellas (13) are disposed between two extreme grooves (R) of laminated core (N), such that the turn coils (E1) and (E2) are sufficiently spaced apart from one another, and the separation generated by the supplementary lamella (13) forms a physical barrier capable of preventing eventual intertwined segments of the turn coil (E1) from being conducted to and pressed in the wrong groove (R2).

2. Tool for inserting turns in laminated cores, in accordance with claim 1, **characterized in that** said plurality of support lamellas (11) are circumferentially distributed.

3. Tool for inserting turns in laminated cores, in accordance with claim 1, **characterized in that** all support lamellas (11) are provided with supplementary lamellas (13).

4. Tool for inserting turns in laminated cores, in accordance with claim 1, **characterized in that** said supplementary lamella (13) is a constitutive element of said support lamella (11'), fabricated into a single piece.

5. Tool for inserting turns in laminated cores, in accordance with claim 1, **characterized in that** said supplementary lamella (13) is an independent part and fixed on said support lamella (11, 11').

6. Tool for inserting turns in laminated cores, in accordance with claim 1, **characterized in that** the surface of said supplementary lamellas (13) undergo a treatment such they have a surface with reduced roughness degree.

7. Tool for inserting turns in laminated cores, in accordance with claim 1, **characterized in that** said supplementary lamellas (13) are made of a material selected from steel, aluminum, bronzed, plastics, and nylon.

8. Tool for inserting turns in laminated cores, in accordance with claim 1, **characterized in that** the top of said supplementary lamellas (13) is as most aligned and nearest as possible of the laminated core surface at the moment the turn coils are inserted in the respective grooves.

## Patentansprüche

1. Werkzeug zum Einfügen von Windungen in die Nute (R) von laminierten Kernen zur Herstellung von Statoren von elektrischen Motoren, das (Anm.: das Werkzeug) eine Mehrzahl von Stützlamellen (11) enthält, die auf einem Basisring (12) angeordnet sind, über dem Drehspulen (E) positioniert sind, **dadurch gekennzeichnet, dass** das Werkzeug ferner enthält Extremstützlamellen (11'), wobei die Extremstützlamellen (11') der Satz von Stützlamellen (11) ist, die mehr voneinander beabstandet sind, wenn die Drehspulen untergebracht sind, und an dem Basisring (12) angeordnet sind, so dass die Drehspulen (E) an den Extremstützlamellen (11') angeordnet sind;
wobei die Extremstützlamellen (11') mit einer supplementären Lamelle (13) versehen sind, die an der Außenoberfläche der Stützlamellen (11, 11') angeordnet ist, wobei die supplementären Lamellen (13) zwischen zwei extremen Nuten (R) des laminierten Kerns (N) angeordnet sind, so dass die Drehspulen (E1) und (E2) ausreichend voneinander beabstandet sind und die Separation, die durch die supplementären Lamelle (13) erzeugt wird, eine physikalische Barriere bildet, die geeignet ist, eventuell verflochtene Segmente der Drehspule (E1) daran zu hindern, geleitet zu werden zu und gedrückt zu werden in die falsche Nut (R2).

2. Werkzeug zum Einfügen von Windungen in laminierte Kerne, nach Anspruch 1, **dadurch gekennzeichnet, dass** die Mehrzahl von Stützlamellen (11) umfangsmäßig verteilt ist.

3. Werkzeug zum Einfügen von Windungen in laminierte Kerne, nach Anspruch 1, **dadurch gekennzeichnet, dass** alle Stützlamellen (11) mit supplementären Lamellen (13) versehen sind

4. Werkzeug zum Einfügen von Windungen in laminierte Kerne, nach Anspruch 1, **dadurch gekennzeichnet, dass** die supplementäre Lamelle (13) ein konstitutives Element der Stützlamelle (11') ist, hergestellt als ein einzelnes Teil.

5. Werkzeug zum Einfügen von Windungen in laminierte Kerne, nach Anspruch 1, **dadurch gekennzeichnet, dass** die supplementäre Lamelle (13) ein unabhängiges Teil ist und an der Stützlamelle (11, 11') befestigt ist.

6. Werkzeug zum Einfügen von Windungen in laminierte Kerne, nach Anspruch 1, **dadurch gekennzeichnet, dass** die Oberfläche der supplementären Lamellen (13) eine Behandlung durchläuft, so dass sie eine Oberfläche mit einem verringerten Rauheitsgrad haben.

7. Werkzeug zum Einfügen von Windungen in laminierte Kerne, nach Anspruch 1, **dadurch gekennzeichnet, dass** die supplementären Lamellen (13) aus einem Material bestehen, das ausgewählt ist aus Stahl, Aluminium, Bronze, Kunststoff und Nylon.

8. Werkzeug zum Einfügen von Windungen in laminierte Kerne, nach Anspruch 1, **dadurch gekennzeichnet, dass** die Oberseite der supplementären Lamellen (13) so weitestgehend ausgerichtet und am nächsten wie möglich bezüglich der laminierten Kernoberfläche in dem Moment, in dem die Drehspulen in die entsprechenden Nute eingesetzt werden.

## Revendications

1. Outil pour insérer des spires dans les gorges (R) de noyaux laminés pour la fabrication de stators de moteurs électriques, qui comprend une pluralité de lamelles supports (11) disposées sur un anneau de base (12) sur lesquelles sont positionnées des bobines à spires (E), **caractérisé en ce que** ledit outil comprend en outre des lamelles supports extrêmes (11'), lesdites lamelles support extrêmes (11') étant l'ensemble de lamelles support (11) les plus éloignées les unes des autres quand les bobines à spires sont adaptées, et étant disposées sur l'anneau de base (12), de façon que les bobines à spires (E) soient disposées sur lesdites lamelles supports extrêmes (11') ; lesdites lamelles supports extrêmes (11') étant munies d'une lamelle supplémentaire (13) disposée sur la surface externe desdites lamelles supports (11, 11'), dans lequel lesdites lamelles supplémentaires (13) sont disposées entre deux gorges extrêmes (R) du noyau laminé (N), de façon que les bobines à spires (E1) et (E2) soient suffisamment espacées les unes des autres, et que la séparation engendrée par la lamelle supplémentaire (13) forme un écran physique capable d'empêcher d'éventuels segments entrelacés de la bobine à spires (E1) d'être amené et pressé dans la mauvaise gorge (R2).

2. Outil pour insérer des spires dans des noyaux laminés, en accord la revendication 1, **caractérisé en ce que** ladite pluralité de lamelles supports (11) sont distribuées selon une circonférence.

3. Outil pour insérer des spires dans des noyaux laminés, en accord la revendication 1, **caractérisé en ce que** toutes les lamelles supports (11) sont munies de lamelles supplémentaires (13).

4. Outil pour insérer des spires dans des noyaux laminés, en accord la revendication 1, **caractérisé en ce que** ladite lamelle supplémentaire (13) est un élément constitutif de ladite lamelle support (11'), fabriquées d'une seule pièce.

5. Outil pour insérer des spires dans des noyaux laminés, en accord la revendication 1, **caractérisé en ce que** ladite lamelle supplémentaire (13) est une partie indépendante et fixée sur ladite lamelle support (11, 11').

6. Outil pour insérer des spires dans des noyaux laminés, en accord la revendication 1, **caractérisé en ce que** la surface desdites lamelles supplémentaires (13) est soumise à un traitement de façon qu'elles aient une surface avec un degré de rugosité réduit.

7. Outil pour insérer des spires dans des noyaux laminés, en accord la revendication 1, **caractérisé en ce que** lesdites lamelles supplémentaires (13) sont réalisées en un matériau choisi parmi l'acier, l'aluminium, le bronze, les plastiques, et le nylon.

8. Outil pour insérer des spires dans des noyaux laminés, en accord la revendication 1, caractérisé en que le sommet desdites lamelles supplémentaires (13) est le plus aligné et le plus près possible de la surface du noyau laminé au moment où les bobines à spires sont insérées dans les gorges respectives.
